Europäisches Patentamt

European Patent Office

Office européen des brevets

(19)

(11) Veröffentlichungsnummer: **0 001 814**
**B1**

(12) **EUROPÄISCHE PATENTSCHRIFT**

(45) Veröffentlichungstag der Patentschrift: **11.08.82**

(51) Int. Cl.³: **C 04 B 1/02, F 27 B 7/32**

(21) Anmeldenummer: **78101249.7**

(22) Anmeldetag: **28.10.78**

(54) **Verfahren und Vorrichtung zum Brennen von Materialien sehr unterschiedlicher Korngrösse, insbesondere von Kalksteinschotter.**

(30) Priorität: **29.10.77 DE 2748670**

(43) Veröffentlichungstag der Anmeldung:
**16.05.79 Patentblatt 79/10**

(45) Bekanntmachung des Hinweises auf die Patenterteilung:
**11.08.82 Patentblatt 82/32**

(84) Benannte Vertragsstaaten:
**BE FR GB**

(56) Entgegenhaltungen:
**DE - C - 597 188**
**FR - A - 1 147 912**
**FR - A - 2 237 154**
**GB - A - 1 054 229**
**US - A - 1 923 084**

(73) Patentinhaber: **BKMI Industrieanlagen GmbH**
**Sapporobogen 6 - 8**
**D-8000 München 40 (DE)**

(72) Erfinder: **Quittkatt, Wolfram, Dr.-Ing.**
**Pippinstrasse 32**
**Gauting (DE)**
Erfinder: **Frank, Dieter, Dipl.-Ing.**
**Thaddäus-Eck-Strasse 34a**
**München-Obermenzing (DE)**

(74) Vertreter: **Vogeser, Werner, Dipl.-Ing.**
**Franz-Joseph-Strasse 39**
**D-8000 München 40 (DE)**

Courier Press, Leamington Spa, England.

Verfahren und Vorrichtung zum Brennen von Materialien sehr
unterschiedlicher Korngröße, insbesondere von Kalksteinschotter

Die Erfindung betrifft ein Verfahren entsprechend dem Oberbegriff des Anspruchs 1, einen Schachtvorwärmer, einen Schachtkühler sowie ein Ofensystem zur Duchführung des Verfahrens, gemäß den Oberbegriffen der Ansprüche 3, 5, 7 und 8.

Es ist bekannt, zur Herstellung von Branntkalk Schachtöfen zu verwenden, wenn ein möglichst geringer Brennstoffbedarf gewünscht wird. In Schachtöfen können jedoch nur relativ grobe, eng klassierte Körnungen verarbeitet werden. Müssen feine Körnungen verarbeitet werden und wird ein definierter Brenngrad und ein minimaler Rest-$CO_2$-Gehalt verlangt, kommen Drehöfen zur Anwendung, die einen wesentlich höheren spezifischen Wärmebedarf haben. Durch Kombination von Drehöfen mit Schachtvorwärmern und Schachtkühlern kann deren spezifischer Wärmeverbrauch erhablich gesenkt werden. Derartige Systeme sind in ZKG (Zeitschrift Zement-Kalk-Gips) 2/69 (Plank) und 1/74 (Wiemer) beschrieben. Ein wesentlicher Nachteil dieser Systeme besteht darin, daß sie nur mit einem engen Kornband (Größtkorn zu Kleinstkorn 2:1) und einer unteren Korngröße von nicht unter 15 mm beaufschlagt werden könne, weil sonst der Strömungswiderstand zu hoch und die Verteilung der Heißgase in der Schüttung zu ungleichmäßig wird. Deshalb stellt die Verwertung der Kalksteinkörnung unter 15 mm ein schwerwiegendes wirtschaftliches Problem für Kalkwerke dar.

Der Erfindung liegt die Aufgabe zugrunde, den Anwendungsbereich von Drehöfen mit Schachtvorwärmer und Schachtkühler hinsichtlich der verwendbaren Körnung zu vergrößern und insbesondere zu feineren Korngrößen-Untergrenzen zu erweitern.

Aus der DE—C 2 250 830 ist es bereits bekannt, das Aufgabegut (etwa mittels Sieb) in eine grobe und eine feine Fraktion getrennt dem Vorwärmer aufzugeben. Dies deschieht durch zwei getrennte konzentrische Schächte mit teils paralleler, teils hintereinander-geschalteter Gasdurchströmung. Hierbei ist zwar eine Vorwärmung ohne allzu großen Strömungswiderstand vorstellbar, jedoch ist von Drehöfen mit derartigen Schachtvorwärmern ein Produkt mit gleichmäßigem Brenngrad und geringem Rest-$CO_2$-Gehalt nicht zu erwarten, weil sich die beiden Körnungen im Drehofen wieder zu einem breiten Kornband vereinigen, das infolge der sog. "Nierenbildung", einer für Drehöfen typischen Entmischungserscheinung von Schüttgütern, eine ungleichmäßige Wärmeeinwirkung erfährt, so daß das im Zentrum der "Niere" verbleibende Feingut schwächer gebrannt wird und die mittlere Körnung einen wesentlich erhöhten Test-$CO_2$-Gehalt aufweist. Darüber hinaus verursacht dieses breite Kornband im Schachtkühler infolge seines hohen Strömungswiderstandes eine ungleichmäßige Kühlung mit erhöhtem Wärmeverlust und Brennschwierigkeiten durch starken Staubrücktrag.

Aus der FR—A—2 237 154 ist ein Schactvorwärmer bekannt, bei dem mittels Klappen der Strömungsverlauf der Heißgase beeinflußt werden kann. Diese Gase durchströmen insbesondere im geöffneten Zustand der Klappen nicht den zentralen Bereich des Aufgabeguts, sondern nehmen einen zu den Austrittsöffnungen gerichteten Verlauf.

Aus der US—A—1 923 084 ist es bekannt in einer Vorwärmkammer den Materialdurchsatz mittels eines Schiebers zu regulieren. Auch bei der aus der DE—C—597 188 bekannten Vorrichtung ist ein Schieber vorgesehen, um die Dicke der sich auf einem Sieb bildenden Rohgutschicht einzustellen.

Aus der FR—A—1 147 912 ist eine Vorrichtung zur thermischen Behandlung von körnigem Gut bekannt, die einen vom Gut durchsetzten schrägen Schacht aufweist, dessen Schüttguthöhe ebenfalls durch einen Schieber einstellbar ist.

Die der Erfindung zugrundeliegende Aufgabe wird durch die in den kennzeichnenden Teilen der Ansprüche 1, 3, 5, 7 und 8 angegebenen Merkmale gelöst. Ausgestaltungen der Erfindung, ergeben sich aus den Unteransprüchen.

Die bekannten Nachteile werden durch dieses Verfahren dadurch vermieden, daß die in zwei oder mehr Kornfraktionen mit einer jeweiligen Bandbreite unter 2:1 zerlegte Originalkörnung des Aufgabegutes dem Ofensystem periodisch abwechselnd aufgegeben wird, wozu als Voraussetzung Vorwärmer und Schachtkühler in einfacher Weise und unverzüglich an den unterschiedlichen Strömungswiderstand der jeweiligen Fraktion angepaßt werden können. Dies geschieht dadurch, daß die von den Heiß- bzw. Kühlgasen durchströmte Schüttschicht, deren Oberfläche in beiden Wärmeaustauschern durch eine freie Böschung gebildet wird, durch Hochziehen bzw. Absenken eines Absperrschiebers dicker bzw. dünner wird, und daß der Strömungswiderstand der Schüttschicht durch einen Regelkreis, der auf den Absperrschieber wirkt, konstant gehalten wird. Der Schachtvorwärmer kann zum Beispiel abwechselnd mit den Kornfraktionen 8—16, 16—32, 32—64 mm beaufschlagt werden, wobei die Umschaltung von einer Körnung auf die andere abhängig von der Speicherkapazität hierfür etwa in einem Rhythmus von 8 Stunden erfolgen kann.

Eine scheinbar ähnliche Anordnung, die in der DT—B 2 123 889 beschrieben ist, sieht eine von oben in die Böschung hineinragende, feststehende Trennwand vor, die die Aufgabe hat, zwei Böschungsabschnitte unterschiedlicher Schütthöhe voneinander abzutrennen, so daß zwei Teilluftströme abgesaugt werden können, deren Mengenverhaltnis durch Drosselung des einen gesteuert werden kann. Hierdurch soll eine Anpassung der Gasdurchströmung an die unterschiedliche Durchströmbarkeit der Schotterschüttung zum Zwecke der gleichmäßigen Erhitzung der Steine erzielt werden. Als Vorteil wird die Steuerbarkeit der Gasmenge unabhängig von Schotterdurchsatz herausgestellt. Abgesehen davon, daß bei dieser Anordnung die Steuerbarkeit durch Drosselung, also verlustbehaftet, erzielt wird, erlaubt eine solche Anordnung keine Anpassung an Strömungswiderstände der Schüttung, die sich um mehr als den Faktor 2 unterscheiden.

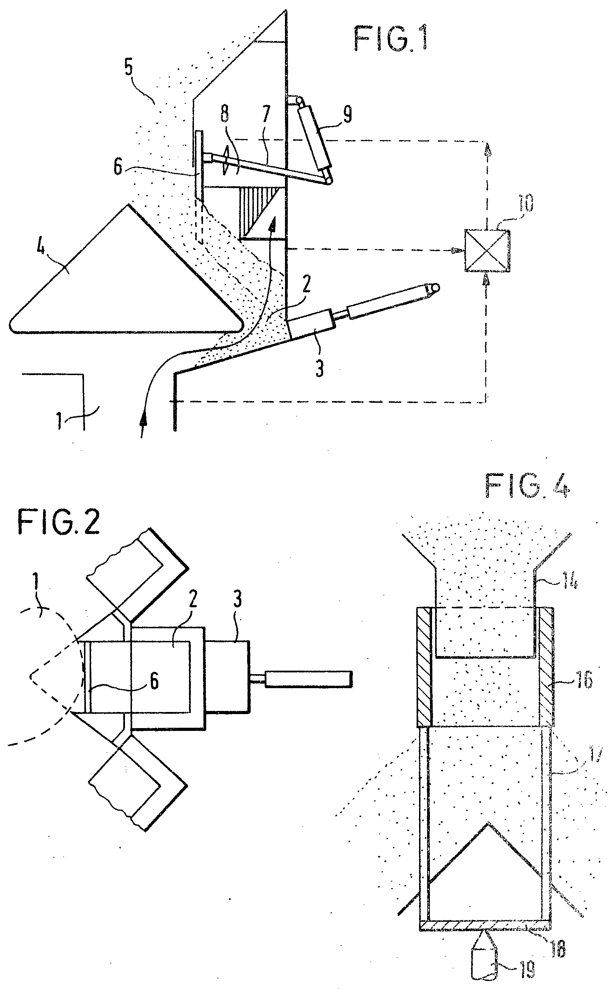

Die Erfindung wird nachstehend anhand der Figuren 1 bis 5 beispielsweise erläutert. Es zeigt:

Figur 1 eine Seitenansicht des Schachtvorwärmers,

Figur 2 eine Aufsicht eines Einstellschiebers des Schachtvorwärmers der Figur 1,

Figur 3 den Schachtkühler,

Figur 4 vergrößert einen Ausschnitt des Schachtkühlers, und

Figur 5 das gesamte Ofensystem.

Der Schachtvorwärmer besteht aus polygonal um den Verbindungs-Gaseintrittsschacht 1 herum angeordneten Brenngutschächten 2 mit rechteckigem Querschnitt, in denen die Rehstein-Brenngutschüttung durch die oszillierende Schubbewegung von Verdrängerstößeln 3 nach unten transportiert und gleichzeitig dosiert wird. Dadurch, daß die Verdrängerstößel 3 den gesamten Brennschachtquerschnitt bestreichen, wird ein Hängenbleiben der Schüttung in Teilen des Schachtes unterbunden.

Hierin liegt ein besonderer Vorteil in der Ausbildung der Vorwärmerschächte. Während bisher die Stößel und ihr Hub so kurz waren, daß sie nur einen Teil des Schachtquerschnittes erfaßten, und sich bei der Ausbildung eines geschlossenen umlaufenden Kreisringschachtes zwischen den Stößeln zwangsläufig Bereiche bildeten, in denen der Schotter sich schlechter bewegte und die deshalb infolge Staubablagerung in der Schüttung allmählich verstopften und sich mit der Zeit in den noch wirksamen Schachtquerschnitt erweiterten, bis eine Reinigung zwangsläufig notwendig war, kann sich bei der erfindungsgemäßen Ausbildung von Schachtquerschnitt und Stößelweg kein Teil der Schüttsäule so im Schacht verdichten, daß er hängen bleibt, weil er sich durch periodischen Entzug seiner Abstützung von unten in kurzen Zeitabständen zwangsläufig nach unten bewegen muß.

Zentral über dem Verbindungsschacht 1 befindet sich ein Stumpfpyramidaler, polygonaler Verdrängungskörper 4, der das aus einem zentralen Aufgabeschacht 5 austretende Schüttgut, das sich frei abböscht, in gleichmäßiger Schicht auf die peripheren Brenngutschächte 2 verteilt. Der Aufgabeschacht 5 läuft unten in Schichthöheneinstellschieber 6 aus, die über einen Hebelmechanismus 7 mittels eines außerhalb des Abgasraumes 8 liegenden Verstellgerätes 9 auf- und abwärts bewegt werden Können. Der durch das die Schüttschicht durchströmende Heißgas hervorgerufene statische Druckunterschied wird oberhalb und unterhalb der Schüttschicht gemessen und mittels eines Reglers 10, der auf das Verstellgerät 9 einwirkt, auf einen vorgegebenen Sollwert gebracht.

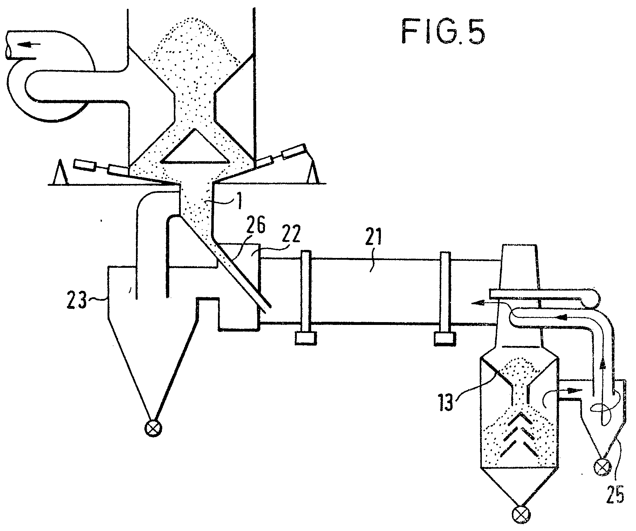

Durch diese Wirkungsweise stellen sich je nach Körnung des Aufgabegutes unterschiedliche Schichtdicken mit gleichem Strömungswiderstand ein, so daß die Gasmenge des Systems unabhängig von der Aufgabekörnung entsprechend dem Durchsatz eingehalten werden kann. Da besonders bei feinen Körnungen schon geringfügige Entmischungen im Aufgabebunker und -schacht 5 ziemlich unterschiedliche Durchströmungswiderstände verursachen können, ist es vorteilhaft, daß jeder der Brenngutschächte unabhängig von den übrigen seine eigene Schichthöhenregelung haben kann. Der Strömungswiderstand der Schüttung wird besonders bei feinen Körnungen erhöht, wenn der Abrieb, der durch die Beanspruchung des Schüttgutes im Vorwärmer entsteht, und der aus dem Drehofen mit den Abgasen mitgerissene Ofenstaub mit durch die Brenn-gutschüttung im Vorwärmschacht hindurch gesogen werden muß. Deshalb ist es vorteilhaft, in den Weg der Abgase vom Drehofeneinlauftopf 22 zum Eintrittsschacht 1 des Schachtvorwärmers einen Zyklon einzuschalten, wie dies Figur 5 zeigt, um diesen Staub vor dem Eintritt der Gase in den Vorwärmer abzuscheiden. Dabei wird die Einschleusung des vorgewärmten Schüttgutes in den Drehofen unter Aufrechterhaltung des für einen workungsvollen Betrieb des Zyklons erforderlichen Differenzdruckes durch ein ziemlich eng dimensioniertes Brenngutzuführungsrohr 26 vorweggenommen.

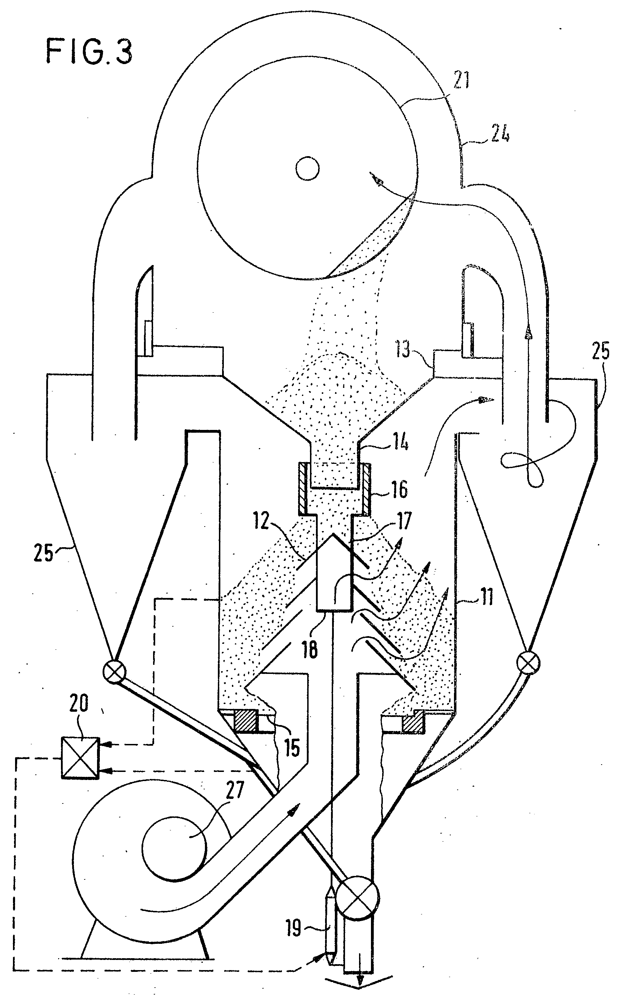

Der Schachtkühler zur Durchführung des Verfahrens besteht aus einem zylindrischen Gehäuse 11 (Figur 3), in dem sich unten ein tannenbaumartiger Belüftungs kegel 12 und mittig darüber ein Sammeltrichter 13 befindet. Das aus dem Auslaufrohr 14 austretende Kühlgut böscht sich über dem Belüftungskegel 12 frei ab und füllt den zylindrischen Raum bis zu dem Boden, der unterhalb des Belüftungskegels 12 von einem drehbaren Ringteller 15 gebildet wird, dessen innere öffnung die Kühlgutböschung vom unteren Rand des Belüftungskegels geringfügig überragt. Die Austraggeschwindigkeit und die Menge wird von der Drehgeschwindigkeit des Ringtellers 15 bestimmt.

Um die Schüttguthöhe dem Strömungswiderstand der Schüttung anpassen zu können, überragt unten ein vertikal bewegliches Rohrstück 16 das Auslaufrohr 14 des Sammeltrichters 13, das von einem Gestänge 17 axial geführt ist. Dieses Gestänge, das aus drei runden Stangen besteht, durchdringt den Belüftungskegel 12 von oben, vereinigt sich darunter in einem Querhaupt 18 (Figur 4), an dem ein somit im luftgekühlten Raum befindliches Verstellgerät 19 angreift, mittels dessen das als Ringschieber wirkende Rohrstück 16 in eine beliebige höhere oder tiefere Stellung gebracht und dort festgehalten werden kaun. Auf dieses Verstellgerät 19 wirkt in gleicher Weise wie beim Schachtvorwärmer ein Regler 20, dem die Druckdifferenz oberhalb und unterhalb der Schüttung als Meßgröße aufgegeben wird und der diesen Widerstand konstant halten soll.

Erfahrungsgemäß wirkt es sich sehr störend für den Betrieb eines derartigen Ofensystems aus, wenn das Brenngut im Drehofen starken Abrieb erleidet und der dadurch entstandene Staub mit der Sekundärluft aus dem Schachtkühler zurück in den Bereich der Flamme getragen wird. Dieser Störfaktor wirkt sich bei besonders feinem Brenngut umso stärker aus.

Eine Entstaubung der Sekundärluft wird jedoch bisher bei Kühlern überhaupt nicht angewandt, weil der zum Betrieb etwa eines Zyklons erforderliche Differenzdruck nicht, zur Verfügung steht, denn die aufgeheizte Kühlluft wird immer direkt in den Ofenkopf und zum Brenner geleitet, wobei im Ofenkopf der statische Druck nur sehr geringfügig vom Luftdruck außerhalb abweichen soll, um das Ausblasen von Staub bzw. das Ansaugen von Falschluft durch die Ofenauslaßdichtung zu vermeiden.

Bei der gezeigten Anordnung werden die Voraussetzungen für die Einschaltung eines Zyklons dadurch geschaffen, daß der normalerweise vorhandene Verbindungsschact zwischen der Kühlzone und dem Ofenkopf für den Külluftdurchtritt abgeriegelt wird, indem der Brenngutsammeltrichter 13 allseitig mit dem Kühlergehäuse verbunden ist und somit als Schleuse und Zentrierung für das Brenngut wirkt. Dadurch lassen sich Zyklone 25 (Figur 3) sehr einfach in den Sekundärluftstrom einschalten.

Da der Brenngutsammeltrichter, wenn er hinreichend gefüllt ist, eine Umgehung der Zyklone 25 durch die Heißluft ausschließt und somit eine wirkungsvolle Abdichtung darstellt, können diese mit dem Überdruck des Kühlluftgebläses 27 betrieben werden, d.h., es ist kein gesondertes Heißluftgebläse dafür erforderlich. Somit wird die Einschaltung von Zyklonen an dieser Stelle durch die Einschaltung des Brenngutsammeltrichters ermöglicht, der neben seiner Abdichtungs- bzw. Schleusenfunktion noch den Zweck hat, das stark entmischt aus dem Drehofen herausfallende Brenngut zum Zentrum des Belüftungskegels zu leiten, um dadurch eine gleichmäßige Kornverteilung nach allen Seiten zu erreichen und zu vereiden, daß sich in der Schüttschicht Bereiche ungleichmäßiger Luftdurchlässigkeit ausbilden.

## Patentansprüche

1. Verfahren zum Brennen von Materialien sehr unterschiedlicher Korngröße im Korngrößenbereich von 5 bis 50 mm, insbesondere von Kalksteinschotter, in einem Drehofen mit Schachtvorwärmer und Schachtkühler, dadurch gekennzeichnet, daß die in zwei oder mehr Kornfraktionen geringer Bandbreite zerlegte Orginalkörnig des Brenn-Aufgabegutes das Ofensystem periodisch und abwechselnd durchläuft, wobei die von den Prozeßgasen durchströmten Schüttschichten des Brenngutes im Schachtvorwärmer und Schachtkühler durch selbsttätige Regelung in ihrer Dicke so verändert werden, daß ihr Strömungswiderstand gleich bleibt.

2. Verfahren nach Anspruch 1, dadurch gekennzeichnet, daß karbonatisches Schüttgut verwendet wird.

3. Schachtvorwärmer zur Durchführung des Verfahrens nach Anspruch 1, bestehend aus polygonal um den Gaseintrittsschacht herum angeordneten Brenngutschächten mit Verdrängerstößeln am Boden, einem Stumpfpyramidalen, polygonalen Verdrängungskörper in der Mitte über dem Gaseintrittsschacht und konzentrisch darüber befindlichem Aufgabeschacht, dadurch gekennzeichnet, daß am unteren Ende des Aufgabeschachtes (5) im Zulaufsektor zu jedem einzelnen Brenngutschacht (2) ein Schichthöheneinstellschieber (6) angeordnet ist, der über einen Hebelmechanismus (7) von einem außerhalb des Abgasraumes (8) liegenden Verstellgerät (9) auf- und abwärts bewegbar ist, und daß die mittels des Schachthöheneinstellschiebers (6) durchgeführte Schichthöhenverstellung durch einen Regler steuerbar ist, der den Statischen Differenzdruck unterhalb und oberhalb der Schüttschicht mit einem vorgegebenen Sollwert vergleicht und das Verstellgerät (9) ansteuert.

4. Schachtvorwärmer nach Anspruch 3, dadurch gekennzeichnet, daß die Brenngutschächte (2) einen im Grundriß rechteckigen Querschnitt haben, der vom Verdrängerstößel (3) restlos bestreichbar ist.

5. Schachtkühler zur Durchführung des Verfahrens nach Anspruch 1, bestehend aus einem zylindrischen Gehäuse, in dem sich unten ein tannenbaumartiger Belüftungskegel und mittig darüber ein Ofenauslaufgut-Sammeltrichter mit einem als Tellerring ausgebildeten Austragsdosierungsorgan unterhalb des Belüftungskegels befindet, dadurch gekennzeichnet, daß das Auslaufrohr (14) des Sammeltrichters (13) unten in einen vertikal beweglichen Ringschieber (16) ausläuft, der von einem den Belüftungskegel durchringenden Gestänge (18) axial geführt ist, an dem unterhalb der Durchdringung ein Verstellgerät (19) angreift, und daß ein Regler (20), der den unterhalb und oberhalb der Schüttschicht gemessenen Differenzdruck mit einem vorgegebenen Sollwert vergleicht, das Verstellgerät (19) ansteuert.

6. Schachtkühler nach Anspruch 5, dadurch gekennzeichnet, daß der Brenngutsammeltrichter (13) an seinem gesamten Umfang mit dem Gehäuse direkt verbunden ist und dadurch im gefüllten Zustand eine Abdichtung für die durch das Kühlbett geblasene heiße Kühlluft darstellt und als Materialschleuse wirkt, die das Brenngut durch Schwerkraft und Nachrutschen in den Raum höheren Druckes einschleust.

7. Ofensystem zur Durchführung des Verfahrens nach Anspruch 1 oder 2, bestehend aus einem Drehofen mit vorgeschaltetem Schachtvorwärmer nach Anspruch 3 oder 4 und nachgeschaltetem Schachtmühler nach Anspruch 5 oder 6, dadurch gekennzeichnet, daß in den Abgasweg vom Drehofen-Einlaufkopf (22) zum Eintrittsschacht (1) des Schachtvorwärmers ein oder mehrere parallele Zyklone (23) eingeschaltet sind.

8. Ofensystem, zur Durchführung des Verfahrens nach Anspruch 1 oder 2, bestehend aus einem Drehofen mit vorgeschaltetem Schachtvorwärmer nach Anspruch 3 oder 4 und nachgeschaltetem Schachtkühler nach Anspruch 5 oder 6, dadurch gekennzeichnet, daß in den Weg der aufgeheizten Kühlluft vom Luftsammelraum im Schachtkühler unterhalb des Ofenauslaufgut-Sammeltrichters (13) zum Drehofenauslaufkopf (24) ein oder mehrere parallele Zyklone (25) eingeschaltet sind.

## Claims

1. A method for burning materials having a very different grain size lying in the range of from 5 to 50 mm, in particular broken limestone, in a rotary kiln having a preheater and a cooler, characterized in that the original granulation of the charged material which is divided into two or more grain fractions having a smaller granulation range is passing the furnace periodically and alternatively, the thickness of the combustion material layers in the preheater and the cooler which are passed through by the process gases being changed by means of automatic control in such a way that their resistance to the passage of the gases remains the same.

2. A method according to Claim 1, characterized in that carbonatic charge material is used.

3. Preheater for carrying out the method according to Claim 1, consisting of combustion material tunnels each provided with a displacement piston at its bottom, which chambers are polygonally arranged around the gas inlet duct, a displacement body having the form of an obtuse-angular polygonal pyramid which is arranged above the gas inlet duct and in the middle thereof, and a feeding tunnel provided concentrically thereabove, characterized in that an adjusting slide (6) for the thickness of the layers is arranged at the lower end of the feeding tunnel (5) in the admission region to each of the individual combustion material tunnels (2), which slide is movable in upward and downward direction by means of an adjusting device (9) arranged outside the exhaust gas chamber, and in that the adjustment of the thickness of the layers which is effected by the adjusting slide (6) is controllable by a controlling means comparing the static pressure difference below and above the layer of charge material with a predetermined nominal value and triggering the adjusting device (9).

4. Preheater according to Claim 3, characterized in that the combustion material tunnels (2) have a rectangular cross-section which is completely swept by the displacement piston (3).

5. Cooler for carrying out the method according to Claim 1, comprising a cylindrical housing, at the downward end of which a fir-shaped ventilation cone is arranged and above said cone and right in the middle thereof a collector funnel for the furnace discharge material, and an outlet dosing means in the form of an annular disk arranged below the ventilation cone, characterized in that the outlet conduit (14) of the collector funnel (13) is ending at its downward end in an annular slide (16) which is vertically movable and axially guided by a linkage (18) penetrating the ventilation cone, which is in engagement with an adjustment device (19) below the point of penetration, and in that a control means (20) comparing the pressure difference above and below the charge layer to a predetermined nominal value is triggering the adjustment device (19).

6. Cooler according to Claim 5, characterized in that the combustion material collector funnel (13) is directly connected to the housing over its entire circumference and thus, in filled condition, provides a seal for the hot cooling air blown through the cooling bed and serving as material sluice channelling the combustion material into the chamber of higher pressure by gravity and self-sliding.

7. A furnace system for carrying out the method according to Claims 1 or 2, comprising a rotary kiln having an upstream preheater according to Claims 3 or 4 and a downstream cooler according to Claims 5 or 6, characterized in that one or more parallel cyclones (23) are arranged in the path of the waste gases from the inlet head (22) of the rotary kiln to the inlet tunnel (1) of the preheater.

8. A furnace system for carrying out the method according to Claim 1 or 2, comprising a rotary kiln having an upstream preheater according to Claims 3 or 4 and a downstream cooler according to Claims 5 or 6, characterized in that one or more parallel cyclones (25) are arranged in the path of the heated cooling air from the air collection chamber in the cooler below the furnace discharge material collector funnel (13) to the outlet head (24) of the rotary kiln.

## Revendications

1. Procédé pour le traitement thermique de matériaux de taille de grains très differente d'une gamme de grains allant de 5 à 50 mm, en particulier du calcaire concassé, dans un four tournant comprenant un préchauffeur et un refroidisseur, caracterisé en ce que la granulation orginale est divisée en deux ou plusieurs fractions granulaires de gamme de taille de grains moins large et passe à travers le four d'une manière périodique et alternante, l'éspaisseur des couches de la matière de charge qui sont traversées par les gaz du procès et qui se trouvent dans le préchauffeur et dans le refroidisseur étant changé par réglage automatique de telle façon que leur résistance au passage du gaz reste la même.

2. Procédé selon la revendication 1, caracterisé en ce que la matière de charge employée est de type carbonatique.

3. Préchauffeur pour la mise en oeuvre du procédé selon la revendication 1, comprennant des tunnels pour la matière de combustion qui sont disposés autour du tunnel d'admission du gaz de façon polygonale et dont les fonds sont munis de poussoirs de déplacement, un corps de déplacement en forme de pyramide optus-angle et polygonal arrangé juste au milieu en haut du tunnel d'admission du gaz, et un tunnel de chargement arrangé ci-dessus et concentrique à ce dernier, caracterisé en ce qu'un coulisseau (6) de réglage de la hauteur des couches est arrangé à la sortie du tunnel de chargement (5) au secteur d'admission de chaque tunnel (2) pour la matière de combustion, que est movable vers le haut et vers le bas par un dispositif de réglage (9) disposé à l'extérieur de la chambre des gaz d'échappement par l'intermédiaire d'un mécanisme de leviers, et en ce que le réglage de la hauteur effectué par le coulisseau de réglage (6) est contrôlable par un régulateur comparent la difference de pression statique en dessus et en dessous de la couche de chargement à une valeur nominale prédédeterminée et qui dirige le dispositif de réglage.

4. Préchauffeur selon la revendication 3, caracterisé en ce que les tunnels (2) pour la matière de combustion sont de section rectangulaire et sont complétement balayés par le poussoir de déplacement.

5. Refroidisseur pour la mise en oeuvre du procédé selon la revendication 1, comprennant un carter cylindrique dans le bas duquel est arrangé un cône d'aeration de forme de sapin et au milieu la-dessus un entonnoircollecteur pour la décharge du four, et un organe de dosage de déchargement de forme de disque annulaire endessous du cône d'aeration, caracterisé en ce que le tuyeau de déchargement (14) de l'entonnoir-collecteur (13) se termine en un coulisseau annulaire (16) déplaçable verticalement que est guidé axialement par des riges (18) traversant le cône d'aeration, et qui est en contact avec un dispositif de réglage (19) en dessous du point de pénétration, et en ce qu' un régulateur (20) compare la difference de pression mesurée en dessus et en dessous de la couche chargée à une valeur prédéterminée et dirige le dispositif de réglage.

6. Refroidisseur selon la revendication 5, caracterisé en ce que l'entonnoir-collecteur (13) est lié directement au carter sur tout son pourtour et ainsi presente, en état rempli, un joint d'étanchéité pour l'air de refroisissement chaud qui est soufflé à travers le lit de refroidissement et qui sert d'écluse de materiaux, qui permet la pénétration de la matière de combustion dans la chambre de pression plus haute par les effects de la gravité et par glissement.

7. Système de four pour la mise en oeuvre du procédé selon les revendications 1 ou 2, comprennant un four tournant avec un préchauffeur disposé en amont du four selon les revendications 3 ou 4 et un refroidisseur disposé en aval selon les revendications 5 ou 6, caracterisé en ce qu'un ou plusieurs cyclones (23) parallèls sont placés dans le chemin des gaz d'échappement allant de la tête d'entrée (22) du four tournant vers le tunnel d'admission (1) du préchauffeur.

8. Système de four pour la mise en oeuvre du procédé selon les revendications 1 ou 2, comprennant un four tournant, en amont duquel est disposé un préchauffeur selon les revendications 3 ou 4 et en aval duquel est disposé un refroidisseur selon les revendications 5 ou 6, caracterisé en ce qu'un ou plusieurs cyclones (25) sont placés dans le chemin de l'air de refroidissement chauffé allant de la chambre collectrice de l'air dans le refroidisseur en dessous de l'entonnoir-collecteur (13) à la tête déchargeante (24) du four tournant.

FIG.1

FIG.2

FIG.4

# FIG.3

FIG.5